# EUROPEAN PATENT SPECIFICATION

(11) **EP 2 530 097 B1**
(45) Date of publication and mention of the grant of the patent: **30.04.2014**
(21) Application number: 12002268.6
(22) Date of filing: 29.03.2012
(51) Int. Cl.: C08F 265/06, C08F 285/00, C08L 33/12

(54) **Impact modifier for polymethyl methacrylate resin having excellent impact strength and transparency and method of preparing the same**
Schlagzähmodifiziermittel für Polymethylmethacrylat-Harze mit hervorragender Schlagfestigkeit und Transparenz und Herstellungsverfahren dafür
Modificateur d'impact pour résine de méthacrylate de polyméthyle ayant une excellente résistance aux chocs et une bonne transparence et son procédé de préparation

(30) Priority: 03.06.2011 KR 20110054013
(43) Date of publication of application: 05.12.2012
(73) Proprietor: LG CHEM, LTD., Seoul 150-721 (KR)
(72) Inventor: Choi, Sung-Hun, Daejeon 301-831 (KR); Kim, Geon-Soo, Daejeon 305-340 (KR); Kim, Yoon-Ho, Jeollanam-do 550-772 (KR); Wi, Yeon-Hwa, Daejeon 305-340 (KR)
(74) Representative: Goddar, Heinz J.

(56) References cited:
- US-A1- 2006 276 587
- US-B1- 6 319 966
- US-B2- 6 867 257

## Description

### BACKGROUND OF THE INVENTION

### Field of the Invention

The present invention relates to an impact modifier for polymethyl methacrylate resins and a method for preparing the same. More specifically, the present invention relates to an impact modifier for polymethyl methacrylate resins capable of improving impact strength without causing deterioration in transparency of a polymethyl methacrylate resin composition through addition of a polyethylene glycol comonomer in the process of forming a core, and a method for preparing the same.

### Description of the Related Art

A polymethyl methacrylate (PMMA) resin is widely used as a glass alternative due to excellent transparency and weatherability, as well as superior hardness, chemical resistance, surface gloss, adhesiveness and the like. However, such a PMMA resin is used only for products with an increased thickness or for limited applications due to lower impact resistance than other plastic materials.

In an attempt to improve impact resistance of PMMA resins, use of a PMMA resin modified with an impact modifier is suggested.

Japanese Patent Publication No. 2006-131803 discloses a PMMA resin modified with an impact modifier using an acrylic rubber. This method enables improvement in impact resistance of PMMA resins, but this improvement is not satisfactory, and hardness and transparency of PMMA resins are disadvantageously deteriorated when a great amount of impact modifier is used in order to improve impact resistance.

US Patent No. 4,999,402 discloses a method for preparing a transparent resin comprising an acrylic rubber core and a polymethyl methacrylate shell layer wherein a molecular weight modifier is incorporated into the shell layer in order to improve processability. The transparent resin prepared by the method can be processed alone, but has problems of unsatisfactory impact strength due to structural problems, and deterioration in transparency due to failure of control of index of refraction between layers and thus limited applications to products with a small thickness comparable to films.

Korean Patent Laid-open No. 2010-0095788 discloses a method for preparing an acrylic rubber core using a cross-linkable monomer in order to improve transparency, processability, hardness and impact resistance, but the improvement is also disadvantageously unsatisfactory.

### SUMMARY OF THE INVENTION

Therefore, the present invention has been made in view of the above problems, and it is one object of the present invention to provide an impact modifier for polymethyl methacrylate resins that is capable of improving impact strength without causing deterioration in transparency when applied to the polymethyl methacrylate resins, and a method for preparing the same.

All of these objects can be accomplished by the present invention described below.

In accordance with one aspect of the present invention, provided is an impact modifier for polymethyl methacrylate resins comprising: (A) a seed formed by polymerizing a monomer mixture comprising methyl methacrylate; (B) a rubber core surrounding the seed wherein the rubber core is formed by polymerizing a monomer mixture comprising alkyl acrylate, an aromatic vinyl compound, a cross-linkable monomer and a polyethylene glycol comonomer; and (C) a shell surrounding the core, wherein the shell is formed by polymerizing a mixture comprising methyl methacrylate and at least one compound selected from the group consisting of alkyl acrylate and an aromatic vinyl compound.

In accordance with another aspect of the present invention, provided is a method for preparing an impact modifier for polymethyl methacrylate resins comprising: (a) polymerizing a monomer mixture comprising methyl methacrylate, alkyl acrylate, and a cross-linkable monomer to prepare a seed; (b) polymerizing a mixture of alkyl acrylate and an aromatic vinyl compound with a monomer mixture of a cross-linkable monomer and a polyethylene glycol comonomer in the presence of the seed to prepare a rubber core; and (c) polymerizing a mixture comprising methyl methacrylate, and at least one compound selected from the group consisting of alkyl acrylate and an aromatic vinyl compound in the presence of the core to prepare a shell.

In accordance with another aspect of the present invention, provided is a polymethyl methacrylate resin composition comprising: 15 to 25% by weight of the impact modifier for polymethyl methacrylate resins; and 75 to 85% by weight of a polymethyl methacrylate resin.

### DETAILED DESCRIPTION OF THE INVENTION

Hereinafter, the present invention will be described in detail.

The present invention provides an impact modifier for polymethyl methacrylate resins comprising: (A) a seed formed by polymerizing a monomer mixture comprising methyl methacrylate; (B) a rubber core surrounding the seed wherein the rubber core is formed by polymerizing a monomer mixture comprising alkyl acrylate, an aromatic vinyl compound, a cross-linkable monomer and a polyethylene glycol comonomer; and (C) a shell surrounding the core, wherein the shell is formed by polymerizing a mixture comprising methyl methacrylate and at least one compound selected from the group consisting of alkyl acrylate and an aromatic vinyl compound.

The (A) seed is present in an amount of 5 to 25% by weight, the (B) rubber core is present in an amount of 50 to 60% by weight and the (C) shell is present in an amount of 15 to 45% by weight.

### (A) Seed

The (A) seed according to the present invention may be prepared by emulsion-polymerizing 5 to 25 parts by weight of a seed, consisting of 5 to 99 parts by weight of an alkyl methyl methacrylate compound, 0.5 to 90 parts by weight of an alkyl acrylate compound, and 0.5 to 5 parts by weight of a cross-linkable monomer, based on 100 parts by weight of the total monomer constituting the impact modifier for polymethyl methacrylate resins. At this time, an emulsifier, an initiator, a cross-linking agent and ion exchange water commonly used for emulsion polymerization may be used.

The (A) seed has a mean particle diameter of 180 to 220 nm. When the mean particle size is less than 180 nm, impact strength is disadvantageously deteriorated and when the mean particle size exceeds 220 nm, transparency is disadvantageously greatly deteriorated.

The (A) seed is comprised in an amount of 5 to 25% by weight. When the content is lower than 5% by weight, the particle diameter of final particles is small and sufficient impact strength cannot be disadvantageously exhibited due to seed particle diameter, and when the content exceeds 25% by weight, the particle diameter of final particles is excessively large and sufficient transparency cannot be disadvantageously obtained.

### (B) Rubber core

The (B) rubber core is prepared by polymerizing 50 to 99 parts by weight of the alkyl acrylate compound, up to 40 parts by weight of the aromatic vinyl compound, 0.5 to 5 parts by weight of the cross-linkable monomer and 0.5 to 5 parts by weight of the polyethylene glycol comonomer, based on 100 parts by weight of the total monomer constituting the impact modifier for polymethyl methacrylate resins.

The alkyl acrylate is a C₁-C₈ acrylate, and is selected from the group consisting of methyl acrylate, ethyl acrylate, propyl acrylate, isopropyl acrylate, butyl acrylate, hexyl acrylate, octyl acrylate, and 2-ethylhexyl acrylate and combinations thereof.

The aromatic vinyl compound is selected from the group consisting of styrene, α -methylstyrene, p-methylstyrene, vinyl toluene, C₁-C₃ alkyl-substituted alkyl styrene, halogen-substituted styrene and combinations thereof.

The cross-linkable monomer is selected from the group consisting of 1,3-butane diol diacrylate, 1,3-butane diol dimethacrylate, 1,4-butane diol diacrylate, 1,4-butane diol dimethacrylate, alkyl acrylate, allyl methacrylate, trimethylolpropane triacrylate, tetraethyleneglycol diacrylate, tetraethyleneglycol dimethacrylate, divinyl benzene and combinations thereof.

The polyethylene glycol comonomer is A-(CH₂-CH₂-O)ₙ-A, A- (CH₂-CH₂-O)ₙ-H or A-(CH₂-CH₂-O)ₙ-CH₃, in which A represents acrylate or methacrylate, and n represents an integer of 4 to 8. Preferably, the polyethylene glycol comonomer has a weight average molecular weight of 500 to 10,000. Representative examples thereof comprise polyethylene glycol acrylate, polyethylene glycol methacrylate, polyethylene glycol diacrylate and polypropylene glycol and combinations thereof. Polyethylene glycol diacrylate is preferred.

The rubber core according to the present invention is produced by polymerizing alkyl acrylate, an aromatic vinyl compound and a polyethylene glycol comonomer in the presence of the seed.

The (B) rubber core has a mean particle diameter of 250 to 300 nm. When the mean particle diameter is lower than 250 nm, impact strength is disadvantageously deteriorated and when the mean particle diameter exceeds 300 nm, transparency is disadvantageously rapidly deteriorated.

The (B) rubber core is present in an amount of 50 to 60% by weight. When the content is less than 50% by weight, the particle diameter of final particles is small and sufficient impact strength is disadvantageously not exhibited due to seed particle diameter, and when the content exceeds 60% by weight, the particle diameter of final particles is excessively large, and sufficient transparency is disadvantageously not obtained.

### (C) Shell

The (C) shell is prepared by polymerizing 50 to 99.995 parts by weight of the methyl methacrylate, and 0.005 to 50 parts by weight of at least one compound selected from the group consisting of alkyl acrylate and an aromatic vinyl compound, based on 100 parts by weight of the total monomer constituting the impact modifier for polymethyl methacrylate resins.

The (C) shell has a mean particle diameter of 280 to 340 nm. When the mean particle diameter is less than 280 nm, impact strength is disadvantageously deteriorated and when the mean particle size exceeds 340 nm, transparency is disadvantageously greatly deteriorated.

The (C) shell is present in an amount of 15 to 45% by weight. When the final content of shell is less than 15% by weight, the particle diameter of final particles due to seed particle diameter is small and sufficient impact strength is not disadvantageously exhibited, and when the content exceeds 45% by weight, the particle diameter of final particles is excessively large, and sufficient transparency is disadvantageously not obtained.

The alkyl acrylate and aromatic vinyl compound may be the same as the compounds used for preparation of the (B) core.

The shell may be prepared by emulsion-polymerizing methyl methacrylate, and at least one compound selected from the group consisting of alkyl acrylate and an aromatic vinyl compound in the presence of the core.

Also, the polymethyl methacrylate resin composition according to the present invention consists of 15 to 25% by weight of the impact modifier for polymethyl methacrylate resins and 75 to 85% by weight of a polymethyl methacrylate resin.

The polymethyl methacrylate resin composition of the present invention may further comprise at least one additive commonly used according to application, such as dye, pigment, lubricant, anti-oxidant, UV stabilizer, thermal stabilizer, reinforcing agent, filler and light stabilizer.

### [Examples]

Now, the present invention will be described in more detail with reference to the following examples.

### Example 1

### (a) Preparation of seed

80 parts by weight of ion exchange water was placed in a reactor, and the temperature of reactor was elevated to 70°C while purging with nitrogen. When the temperature of ion exchange water reached 70°C, 0.05 parts by weight of sodium dodecylsulfate (SDS, 3 wt% solution), 4.48 parts by weight of methyl methacrylate (MMA), 0.5 parts by weight of butyl acrylate (BA) and 0.02 parts by weight of allyl methacrylate (AMA) were simultaneously added to the reactor. When the temperature of the reactor was stabilized at 70°C, 0.1 parts by weight of potassium sulfate (KPS, 3 wt% solution) was added thereto to initiate polymerization. The mixture was aged for one hour, 0.1 parts by weight of sodium dodecylsulfate (SDS, 3 wt% solution), 13.44 parts by weight of methyl methacrylate (MMA), 1.5 parts by weight of butyl acrylate (BA) and 0.06 parts by weight of allyl methacrylate (AMA) were stirred to emulsify the monomers. The emulsified monomer was added dropwise at a temperature of 70°C under a nitrogen atmosphere for one hour and, at the same time, 0.0094 parts by weight of ethylenediamine tetrasodium acetate, 0.006 parts by weight of ferrous sulfate, 0.04 parts by weight of sodium formaldehyde sulfoxylate and 0.05 parts by weight of diisopropylbenzene hydroperoxide (DIPHP, 50 wt% solution) were added thereto and aged for one hour after the reaction was terminated. At this time, the seed was present in an amount of 20% by weight, based on 100% by weight of the total monomers of the transparent resin composition according to the present invention.

The mean particle diameter of polymerized seed latex was measured using NICOMP as a laser light scatter. As a result, the mean particle diameter was 190 nm and the index of refraction was 1.4901.

### (b) Preparation of acrylic rubber core

First, 25 parts by weight of ion exchange water, 0.4 parts by weight of sodium dodecylsulfate, 45 parts by weight of butyl acrylate, 9 parts by weight of styrene, 0.5 parts by weight of allyl methacrylate and 0.5 parts by weight of polyethylene glycol diacrylate (PEGDA) were stirred to emulsify the monomers. The emulsified monomer was added dropwise to the reactor, in which seed polymerization was completed, at a temperature of 70°C under a nitrogen atmosphere for 4 hours, and at the same time, 0.0235 parts by weight of ethylenediamine tetrasodium acetate, 0.015 parts by weight of ferrous sulfate, 0.1 parts by weight of sodium formaldehyde sulfoxylate, and 0.1 parts by weight of diisopropylbenzene hydroperoxide were added thereto and then were aged for one hour after the reaction was terminated. At this time, the acrylic rubber core was present in an amount of 55% by weight, based on 100% by weight of the total monomers of the transparent resin composition according to the present invention.

A conversion ratio of the polymerized core latex was 99%, the mean particle diameter was 280 nm, and the index of refraction was 1.4901.

### Preparation of (c) shell

After completion of core polymerization, 12 parts by weight of ion exchange water, 0.2 parts by weight of sodium dodecylsulfate, 24 parts by weight of methyl methacrylate, and 1 part by weight of methyl acrylate were emulsified and were added dropwise for 2 hours. At the same time, 0.00235 parts by weight of ethylenediamine tetrasodium acetate, 0.0015 parts by weight of ferrous sulfate, 0.01 parts by weight of sodium formaldehyde sulfoxylate, and 0.02 parts by weight of diisopropylbenzene hydroperoxide were added and aged for one hour after the reaction was terminated, and nitrogen purging was continuously performed until the reaction was terminated. At this time, the shell was present in an amount of 25% by weight, based on 100% by weight of the total monomers of the transparent resin composition according to the present invention.

A conversion ratio of the final polymerized transparent resin latex was 99%, the mean particle diameter was 320 nm, and the index of refraction was 1.4901.

Ion exchange water was added to the final transparent resin latex thus obtained to reduce the final content to 15% by weight or less and the temperature was elevated to 80°C while the mixture was slowly stirred with a stirrer. 22% by weight of an aqueous calcium chloride solution was added thereto to prepare a slurry-type mixture, and the mixture was aged at an elevated temperature of 90°C or higher and cooled. The cooled mixture was washed with ion exchange water, filtered and dried to obtain a powdery transparent resin.

20% by weight of the powdery transparent resin thus obtained was mixed with 80% by weight of polymethyl methacrylate, 0.2% by weight of a lubricant, 0.1% by weight of an antioxidant, and 0.01% by weight of a light stabilizer were added thereto, kneaded, molded into pellets using a twin-screw extruder and the pellets were injected to prepare samples.

### Example 2

The same process as in Example 1 was performed except that the content of PEGDA was 1.5 parts by weight.

### Example 3

The same process as in Example 1 was performed except that the content of PEGDA was 2.5 parts by weight.

### Example 4

The same process as in Example 1 was performed except that the number of n in PEGDA was 6.

### Example 5

The same process as in Example 1 was performed except that the number of n in PEGDA was 8.

### Example 6

The same process as in Example 5 was performed except that the content of PEGDA was 1.5 parts by weight.

### Example 7

The same process as in Example 6 was performed except that a resin composition was prepared by mixing 15% by weight of an impact modifier with 85% by weight of polymethyl methacrylate during processing.

### Comparative Example 1

Pellets composed of 100% by weight of a polymethyl methacrylate resin (LG-MMA, IF830A) were injected and samples were prepared therefrom.

### Comparative Example 2

The same process as in Example 1 was performed except that the number of n in PEGDA was 2.

### Comparative Example 3

The same process as in Example 1 was performed except that PEGDA was not added.

### Comparative Example 4

The same process as in Example 1 was performed except that the number of n in PEGDA was 16.

### Comparative Example 5

The same process as in Example 1 was performed except that the number of n in PEGDA was 6 and a resin composition was prepared by mixing 10% by weight of an impact modifier with 90% by weight of polymethyl methacrylate during processing.

### [Test Example]

Physical properties of polymethyl methacrylate resin compositions prepared in Examples 1 to 7 and Comparative Example 1 to 5 were measured in accordance with the following method and the results thus obtained are shown in Table 1 below.
* Haze - measured in accordance with ASTM D1003 using an injection molded block with a thickness of 3.175 mm.
* Index of refraction - resin was molded into a thin film with a small thickness of 2 mm and measured using an Abbe refractometer at 25°C in accordance with ASTM D1298.
* Impact strength (kgf·m/m) - Izod impact strength was measured in accordance with ASTM D256 using a 1/8" sample.

**TABLE 1**

| | | Composition of core (parts by weight) | | | | | Amount of used impact modifier | PMMA | Physical properties | | |
|---|---|---|---|---|---|---|---|---|---|---|---|
| | Seed | AMA | PEGDA | | BA | SM | | | Optical properties | | Impact strength |
| | | | No. of n | Content | | | | | Haze (%) | Index of refraction | Izod (kgf m/m) |
| Ex. 1 | 20 | 0.5 | 4 | 0.5 | 45 | 9 | 20 | 80 | 1.0 | 1.490 1 | 4.8 |
| Ex. 2 | 20 | 0.5 | 4 | 1.5 | 44 | 9 | 20 | 80 | 1.1 | 1.490 1 | 4.8 |
| Ex. 3 | 20 | 0.5 | 4 | 2.5 | 43 | 9 | 20 | 80 | 1.0 | 1.490 1 | 5.0 |
| Ex. 4 | 20 | 0.5 | 6 | 0.5 | 45 | 9 | 20 | 80 | 1.0 | 1.490 1 | 5.0 |
| Ex. 5 | 20 | 0.5 | 8 | 0.5 | 45 | 9 | 20 | 80 | 1.0 | 1.490 1 | 5.0 |
| Ex. 6 | 20 | 0.5 | 8 | 1.5 | 44 | 9 | 20 | 80 | 1.1 | 1.490 1 | 5.1 |
| Ex. 7 | 20 | 0.5 | 8 | 1.5 | 44 | 9 | 15 | 85 | 1.1 | 1.490 1 | 4.4 |
| Comp. Ex. 1 | - | - | - | - | - | - | - | 100 | 0.9 | 1.490 1 | 1.8 |
| Comp. Ex. 2 | 20 | 0.5 | 2 | 0.5 | 45 | 9 | 20 | 80 | 1.2 | 1.490 1 | 3.8 |
| Comp. Ex. 3 | 20 | 0.5 | 4 | 0 | 45 | 9 | 20 | 80 | 1.2 | 1.490 1 | 3.6 |
| Comp. Ex. 4 | 20 | 0.5 | 16 | 0.5 | 45 | 9 | 20 | 80 | 2.1 | 1.490 1 | 4.8 |
| Comp. Ex. 5 | 20 | 0.5 | 6 | 0.5 | 45 | 9 | 10 | 90 | 1.1 | 1.490 1 | 3.6 |

As can be seen from Table 1 above, in the process of producing the core, the impact modifier for polymethyl methacrylate resins according to the present invention prepared by adding a polyethylene glycol comonomer comprising a repeating unit, (CH₂-CH₂-O)ₙ- (in which n is an integer of 4 to 8), was effective in considerably improving impart strength without causing deterioration in transparency, when comprised in a polymethyl methacrylate resin, as compared to Comparative Examples 1 and 3. It was confirmed that Comparative Example 2 in which the number of n of polyethylene glycol is less than the range defined in the present invention exhibited deteriorated impact strength and the case in which the number of n is 16, which exceeds the range defined in the present invention exhibited similar impact strength, but considerably higher haze. Also, it was confirmed that Comparative Example 5 in which the impact modifier is present in an amount out of the range of the impact modifier of the present invention also exhibited considerably deteriorated impact strength.

As apparent from fore-going, according to the present invention, impact strength can be effectively improved without deterioration in transparency by using polyethylene glycol comonomer in the process of producing the core of the impact modifier for polymethyl methacrylate resins.

## Claims

1. An impact modifier for polymethyl methacrylate resins comprising:
(A) a seed formed by polymerizing a monomer mixture comprising methyl methacrylate, wherein the mean particle diameter of the seed ranges from 180 nm to 220 nm;
(B) a rubber core surrounding the seed, wherein the rubber core is formed by polymerizing a monomer mixture comprising alkyl acrylate, an aromatic vinyl compound, a cross-linkable monomer and a polyethylene glycol comonomer, wherein the mean particle diameter of the rubber core ranges from 250 nm to 300 nm, and wherein the polyethylene glycol comonomer is A-(CH₂-CH₂-O)ₙ-A, A-(CH₂-CH₂-O)ₙ-H or A-(CH₂-CH₂-O)ₙ-CH₃, in which A is acrylate or methacrylate, n is an integer of 4 to 8; and
(C) a shell surrounding the core, wherein the shell is formed by polymerizing a mixture comprising methyl methacrylate and at least one compound selected from the group consisting of alkyl acrylate and an aromatic vinyl compound, and wherein the mean particle diameter of the shell ranges from 280 nm to 340 nm, and wherein the (A) seed is in an amount of 5 to 25% by weight, the (B) rubber core is in an amount of 50 to 60% by weight and the (C) shell is in an amount of 15 to 45% by weight.

2. The impact modifier according to claim 1, wherein the polyethylene glycol comonomer is at least one selected from the group consisting of polyethylene glycol acrylate, polyethylene glycol methacrylate, polyethylene glycol diacrylate and polypropylene glycol acrylate.

3. The impact modifier according to claim 1, wherein the (B) rubber core is prepared by polymerizing 50 to 99 parts by weight of the alkyl acrylate, 9 to 40 parts by weight of the aromatic vinyl compound, 0.5 to 5 parts by weight of the cross-linkable monomer and 0.5 to 5 parts by weight of the polyethylene glycol comonomer, based on 100 parts by weight of the total monomers constituting the impact modifier for polymethyl methacrylate resins.

4. The impact modifier according to claim 1, wherein 20 the (C) shell is prepared by polymerizing 50 to 99.995 parts by weight of the methyl methacrylate, and 0.005 to 50 parts by weight of at least one compound selected from the group consisting of the alkyl acrylate and the aromatic vinyl compound, based on 100 parts by weight of the total monomer constituting the impact modifier for polymethyl methacrylate resins.

5. The impact modifier according to claim 1, wherein the alkyl acrylate of (B) and (C) is at least one selected from the group consisting of methyl acrylate, ethyl acrylate, propyl acrylate, isopropyl acrylate, butyl acryiate, hexyl acrylate, octyl acrylate, and 2-ethylhexyl acrylate.

6. The impact modifier according to claim 1, wherein the aromatic vinyl compound of (B) and (C) is at least one selected from the group consisting of styrene, α -methylstyrene, p-methylstyrene, vinyl toluene, C₁-C₃ alkyl substituted alkyl styrene, and halogen-substituted styrene.

7. A method of preparing an impact modifier for polymethyl methacrylate resins comprising:
(a) polymerizing a monomer mixture comprising methyl methacrylate, alkyl acrylate and a cross-linkable monomer to prepare a seed;
(b) polymerizing a monomer mixture comprising a mixture of alkyl acrylate and an aromatic vinyl compound, a cross-linkable monomer and a polyethylene glycol comonomer in the presence of the seed, to prepare a rubber core, wherein the polyethylene glycol comonomer is A-(CH₂-CH₂-O)ₙ-A-A-(CH₂-CH₂-O)ₙ-H or A-(CH₂-CH₂-O)ₙ-CH₃, in which A is acrylate or methacrylate, n is an integer of 4 to 8; and
(c) polymerizing a mixture comprising methyl methacrylate, and at least one compound selected from the group consisting of alkyl acrylate and an aromatic vinyl compound in the presence of the core, to prepare a shell, and wherein the mean particle diameter of the seed ranges from 180 nm to 220 nm, and is in an amount of 5 to 25% by weight, the mean particle diameter of the rubber core ranges from 250 nm to 300 nm and is in an amount of 50 to 60% by weight and the (C) shell ranges from 280 nm to 340 nm and is in an amount of 15 to 45% by weight.

8. The method according to claim 7 comprising:
(a) 5 to 99 parts by weight of methyl methacrylate, 0.5 to 90 parts by weight of the alkyl acrylate, and 0.5 to 5 parts by weight of the cross-linkable monomer, based on 100 parts by weight of the total monomer constituting the impact modifier for polymethyl methacrylate resins, to prepare a seed;
(b) polymerizing 50 to 99 parts by weight of the alkyl acrylate, up to 40 parts by weight of the aromatic vinyl compound, 0.5 to 5 parts by weight of the cross-linkable monomer and 0.5 to 5 parts by weight of the polyethylene glycol comonomer, based on 100 parts by weight of the total monomer constituting the impact modifier for polymethyl methacrylate resins, in the presence of the seed, to prepare a rubber core; and
(c) polymerizing a mixture comprising 50 to 99.995 parts by weight of methyl methacrylate, and 0.005 to 50 parts by weight of at least one compound selected from the group consisting of alkyl acrylate and the aromatic vinyl compound, based on 100 parts by weight of the total monomer constituting the impact modifier for polymethyl methacrylate resins, in the presence of the core, to prepare a shell.

9. The method according to claim 7, wherein the monomer mixture of (b) further comprises at least one crosslinkable monomer selected from the group consisting of 1,3-butane diol diacrylate, 1,3-butane diol dimethacrylate, 1,4-butane diol diacrylate, 1,4-butane diol dimethacrylate, alkyl acrylate, allyl methacrylate, trimethylolpropane triacrylate, tetraethyleneglycol diacrylate, tetraethyleneglycol dimethacrylate and divinyl benzene.

10. The method according to claim 7, wherein the alkyl acrylate of (b) and (c) is at least one selected from the group consisting of methyl acrylate, ethyl acrylate, propyl acrylate, isopropyl acrylate, butyl acrylate, hexyl acrylate, octyl acrylate, and 2-ethylhexyl acrylate.

11. The method according to claim 7, wherein the aromatic vinyl compound of (b) and (c) is at least one selected from the group consisting of styrene, α-methylstyrene, p-methylstyrene, vinyl toluene, C₁-C₃ alkyl-substituted alkyl styrene, and halogen-substituted styrene.

12. A polymethyl methacrylate resin composition comprising:
15 to 25% by weight of the impact modifier for polymethyl methacrylate resins according to claim 1; and 75 to 85% by weight of a polymethyl methacrylate resin.

## Patentansprüche

1. Schlagzähmodifiziermittel für Polymethylmethacrylatharze, welches umfasst:
(A) einen Keim, der gebildet ist durch Polymerisieren einer Monomermischung umfassend Methylmethacrylat, wobei der mittlere Teilchendurchmesser des Keims von 180 nm bis 220 nm reicht;
(B) einen den Keim umgebenden Kautschukkern, wobei der Kautschukkern gebildet ist durch Polymerisieren einer Monomermischung umfassend Alkylacrylat, eine aromatische Vinylverbindung, ein vernetzbares Monomer und ein Polyethylenglykolcomonomer, wobei der mittlere Teilchendurchmesser des Kautschukkerns von 250 nm bis 300 nm reicht, und wobei das Polyethylenglykolcomonomer A-(CH₂-CH₂-O)ₙ-A, A-(CH₂-CH₂-O)ₙ-H oder A-(CH₂-CH₂-O)ₙ-CH₃ ist, wobei A Acrylat oder Methacrylat ist, n eine ganze Zahl von 4 bis 8 ist; und
(C) einen den Kern umgebenden Mantel, wobei der Mantel gebildet ist durch Polymerisieren einer Mischung umfassend Methylmethacrylat und wenigstens eine Verbindung ausgewählt aus der Gruppe bestehend aus Alkylacrylat und einer aromatischen Vinylverbindung, und wobei der mittlere Teilchendurchmesser des Mantels von 280 nm bis 340 nm reicht, und wobei der (A) Keim in einer Menge von 5 bis 25 Gewichtsprozent, der (B) Kautschukkern in einer Menge von 50 bis 60 Gewichtsprozent und der (C) Mantel in einer Menge von 15 bis 45 Gewichtsprozent vorliegt.

2. Schlagzähmodifiziermittel nach Anspruch 1, wobei das Polyethylenglykolcomonomer wenigstens eines ist ausgewählt aus der Gruppe bestehend aus Polyethylenglykolacrylat, Polyethylenglykolmethacrylat, Polyethylenglykoldiacrylat und Polypropylenglykolacrylat.

3. Schlagzähmodifiziermittel nach Anspruch 1, wobei der (B) Kautschukkern hergestellt ist durch Polymerisieren von 50 bis 99 Gewichtsteilchen des Alkylacrylats, 9 bis 40 Gewichtsteilen der aromatischen Vinylverbindung, 0,5 bis 5 Gewichtsteilen des vernetzbaren Monomers und 0,5 bis 5 Gewichtsteilen des Polyethylenglykolcomonomers, basierend auf 100 Gewichtsteilen der gesamten Monomere, die das Schlagzähmodifiziermittel für Polymethylmethacrylatharze ausbilden.

4. Schlagzähmodifiziermittel nach Anspruch 1, wobei der (C) Mantel hergestellt ist durch Polymerisieren von 50 bis 99,995 Gewichtsteilen des Methylmethacrylats und 0,005 bis 50 Gewichtsteilen wenigstens einer Verbindung ausgewählt aus der Gruppe bestehend aus dem Alkylacrylat und der aromatischen Vinylverbindung, basierend auf 100 Gewichtsteile des gesamten Monomers, das das Schlagzähmodifiziermittel für Polymethylmethacrylatharze ausbildet.

5. Schlagzähmodifiziermittel nach Anspruch 1, wobei das Alkylacrylat von (B) und (C) wenigstens eines ist ausgewählt aus der Gruppe bestehend aus Methylacrylat, Ethylacrylat, Propylacrylat, Isopropylacrylat, Butylacrylat, Hexylacrylat, Octylacrylat und 2-Ethylhexylacrylat.

6. Schlagzähmodifiziermittel nach Anspruch 1, wobei die aromatische Vinylverbindung von (B) und (C) wenigstens eine ist ausgewählt aus der Gruppe bestehend aus Styrol, α-Methylstyrol, p-Methylstyrol, Vinyltoluol, C₁-C₃-alkylsubstituiertem Alkylstyrol und Halogen-substituiertem Styrol.

7. Verfahren zum Herstellen eines Schlagzähmodifiziermittels für Polymethylmethacrylatharze, welches umfasst:
(a) Polymerisieren einer Monomermischung umfassend Methylmethacrylat, Alkylacrylat und ein vernetzbares Monomer, um einen Keim herzustellen;
(b) Polymerisieren einer Monomermischung umfassend eine Mischung aus Alkylacrylat und einer aromatischen Vinylverbindung, einem vernetzbaren Monomer und einem Polyethylenglykolcomonomer in der Gegenwart des Keims, um einen Kautschukkern herzustellen, wobei das Polyethylenglykolcomonomer A-(CH₂-CH₂-O)ₙ-A, A-(CH₂-CH₂-O)ₙ-H oder A-(CH₂-CH₂-O)ₙ-CH₃ ist, wobei A Acrylat oder Methacrylat ist, n eine ganze Zahl von 4 bis 8 ist; und
c) Polymerisieren einer Mischung umfassend Methylmethacrylat und wenigstens eine Verbindung ausgewählt aus der Gruppe bestehend aus Alkylacrylat und einer aromatischen Vinylverbindung in der Gegenwart des Kerns, um einen Mantel herzustellen, und wobei der mittlere Teilchendurchmesser des Keims von 180 nm bis 220 nm reicht und in einer Menge von 5 bis 25 Gewichtsprozent vorliegt, der mittlere Teilchendurchmesser des Kautschukkerns von 250 nm bis 300 nm reicht und in einer Menge von 50 bis 60 Gewichtprozent vorliegt und der (C) Mantel von 280 nm bis 340 nm reicht und in einer Menge von 15 bis 45 Gewichtsprozent vorliegt.

8. Verfahren nach Anspruch 7 welches umfasst:
(a) 5 bis 99 Gewichtsteile Methylmethacrylat, 0,5 bis 90 Gewichtsteile des Alkylacrylats und 0,5 bis 5 Gewichtsteile des vernetzbaren Monomers, basierend auf 100 Gewichtsteilen des gesamten Monomers, das das Schlagzähmodifiziermittel für Polymethylmethacrylatharze ausbildet, um einen Keim herzustellen;
(b) Polymerisieren von 50 bis 99 Gewichtsteilen des Alkylacrylats, bis zu 40 Gewichtsteilen der aromatischen Vinylverbindung, 0,5 bis 5 Gewichtsteilen des vernetzbaren Monomers und 0,5 bis 5 Gewichtsteilen des Polyethylenglykolcomonomers, basierend auf 100 Gewichtsteilen des gesamten Monomers, das das Schlagzähmodifiziermittel für Polymethylmethacrylatharze ausbildet, in der Gegenwart des Keims, um einen Kautschukkern herzustellen;
c) Polymerisieren einer Mischung umfassend 50 bis 99,995 Gewichtsteile Methylmethacrylat und 0,005 bis 50 Gewichtsteile wenigstens einer Verbindung ausgewählt aus der Gruppe bestehend aus Alkylacrylat und der aromatischen Vinylverbindung, basierend auf 100 Gewichtsteilen des gesamten Monomers, das das Schlagzähmodifiziermittel für Polymethylmethacrylatharze ausbildet, in der Gegenwart des Kerns, um einen Mantel herzustellen.

9. Verfahren nach Anspruch 7, wobei die Monomermischung von (b) ferner wenigstens ein vernetzbares Monomer umfasst, das ausgewählt wird aus der Gruppe bestehend aus 1,3-Butandioldiacrylat, 1,3-Butandioldimethacrylat, 1,4-Butandioldiacrylat, 1,4-Butandioldimethacrylat, Alkylacrylat, Allylmethacrylat, Trimethylolpropantriacrylat, Tetraethylenglykoldiacrylat, Tetraethylenglykoldimethacrylat und Divinylbenzol.

10. Verfahren nach Anspruch 7, wobei das Alkylacrylat von (b) und (c) wenigstens eines ist ausgewählt aus der Gruppe bestehend aus Methylacrylat, Ethylacrylat, Propylacrylat, Isopropylacrylat, Butylacrylat, Hexylacrylat, Octylacrylat und 2-Ethylhexylacrylat.

11. Verfahren nach Anspruch 7, wobei die aromatische Vinylverbindung von (b) und (c) wenigstens eine ist ausgewählt aus der Gruppe bestehend aus Styrol, α-Methylstyrol, p-Methylstyrol, Vinyltoluol, C₁-C₃-Alkyl-substituiertem Alkylstyrol und Halogen-substituiertem Styrol.

12. Polymethylmethacrylatharzzusammensetzung, welche umfasst:
15-25 Gewichtsprozent des Schlagzähmodifiziermittels für Polymethylmethacrylatharze nach Anspruch 1; und 75 bis 85 Gewichtsprozent eines Polymethyl-methacrylatharzes.

## Revendications

1. Modificateur d'impact pour résines de méthacrylate de polyméthyle comprenant :
(A) un germe formé par la polymérisation d'un mélange de monomères comprenant du méthacrylate de méthyle, dans lequel le diamètre particulaire moyen du germe se situe dans la plage comprise entre 180 nm et 220 nm ;
(B) un coeur en caoutchouc entourant le germe, dans lequel le coeur en caoutchouc est formé par la polymérisation d'un mélange de monomères comprenant un acrylate d'alkyle, un composé vinylique aromatique, un monomère réticulable et un comonomère de polyéthylène glycol, dans lequel le diamètre particulaire moyen du coeur en caoutchouc se situe dans la plage de 250 nm à 300 nm, et dans lequel le comonomère de polyéthylène glycol est A-(CH₂-CH₂-O)ₙ-A, A-(CH₂-CH₂-O)ₙ-H ou A-(CH₂-CH₂-O)ₙ-CH₃, dans lequel A représente acrylate ou méthacrylate, n représente un nombre entier valant de 4 à 8 ; et
(C) une enveloppe entourant le coeur, dans laquelle l'enveloppe est formée par la polymérisation d'un mélange contenant du méthacrylate de méthyle et au moins un composé sélectionné parmi le groupe constitué d'acrylate d'alkyle et un composé vinylique aromatique et dans lequel le diamètre particulaire moyen de l'enveloppe se situe dans la plage de 280 nm à 340 nm, et dans lequel le (A) germe est présent selon une quantité de 5 à 25 % en poids, le (B) coeur en caoutchouc est présent selon une quantité de 50 à 60 % en poids et (C) l'enveloppe est présente selon une quantité de 15 à 45 % en poids.

2. Modificateur d'impact selon la revendication 1, dans lequel le comonomère de polyéthylène glycol est au moins un comonomère sélectionné parmi le groupe constitué d'acrylate de polyéthylène glycol, de méthacrylate de polyéthylène glycol, de diacrylate de polyéthylène glycol et d'acrylate de polyéthylène glycol.

3. Modificateur d'impact selon la revendication 1, dans lequel le (B) coeur de caoutchouc est préparé par la polymérisation de 50 à 99 parties en poids de l'acrylate d'alkyle, de 9 à 40 parties en poids du composé vinylique aromatique, de 0,5 à 5 parties en poids du monomère réticulable et de 0,5 à 5 parties en poids du comonomère de polyéthylène glycol, sur la base des 100 parties en poids de la concentration totale des monomères constituant le modificateur d'impact pour résines de méthacrylate de polyméthyle.

4. Modificateur d'impact selon la revendication 1, dans lequel 20 (C) l'enveloppe est préparée par la polymérisation de 50 à 99,995 parties en poids du méthacrylate de méthyle et 0,005 à 50 parties en poids d'au moins un composé sélectionné parmi le groupe constitué de l'acrylate d'alkyle et du composé vinylique aromatique, sur la base des 100 parties en poids de la concentration totale des monomères constituant le modificateur d'impact pour résines de méthacrylate de polyméthyle.

5. Modificateur d'impact selon la revendication 1, dans lequel l'acrylate d'alkyle de (B) et de (C) est au moins un composé sélectionné parmi le groupe constitué d'acrylate de méthyle, d'acrylate d'éthyle, d'acrylate de propyle, d'acrylate d'isopropyle, d'acrylate de butyle, d'acrylate d'hexyle, d'acrylate d'octyle et d'acrylate 2-éthylhexyle.

6. Modificateur d'impact selon la revendication 1, dans lequel le composé vinylique aromatique de (B) et de (C) est au moins un composé sélectionné parmi le groupe constitué de styrène, d'alpha-méthylstyrène, de p-méthylstyrène, de vinyle toluène, d'alkyle styrène substitué par l'alkyle en C₁ à C₃ et de styrène substitué par l'halogène.

7. Procédé de préparation d'un modificateur d'impact pour résines de méthacrylate de polyméthyle comprenant :
(a) la polymérisation d'un mélange de monomères comprenant du méthacrylate de méthyle, de l'acrylate d'alkyle et un monomère réticulable afin de préparer un germe ;
(b) la polymérisation d'un mélange de monomères comprenant un mélange d'acrylate d'alkyle et d'un composé vinylique aromatique, un monomère réticulable et un comonomère de polyéthylène glycol en la présence du germe, afin de préparer un coeur en caoutchouc, dans lequel le comonomère de polyéthylène glycol est A-(CH₂-CH₂-O)ₙ-A, A-(CH₂-CH₂-O)ₙ-H ou A-(CH₂-CH₂-O)ₙ-CH₃, dans lequel A représente un acrylate ou un méthacrylate, n représente un nombre entier valant 4 à 8 ; et
(c) polymérisation d'un mélange comprenant du méthacrylate de méthyle et au moins un composé sélectionné parmi le groupe constitué d'acrylate d'alkyle et d'un composé vinylique aromatique en la présence du coeur, afin de préparer une enveloppe, et dans lequel le diamètre particulaire moyen du germe se situe dans la plage de 180 nm à 220 nm, et est présent selon une quantité allant de 5 à 25 % en poids, le diamètre particulaire moyen du coeur en caoutchouc se situe dans la plage de 250 nm à 300 nm et est présent selon une quantité de 50 à 60 % en poids et (C) l'enveloppe se situe dans la plage de 280 nm à 340 nm et est présente selon une quantité de 15 à 45 % en poids.

8. Procédé selon la revendication 7 comprenant :
(a) 5 à 99 parties en poids de méthacrylate de méthyle, 0,5 à 90 parties en poids de l'acrylate d'alkyle et 0,5 à 5 parties en poids du monomère réticulable, sur la base des 100 parties en poids de la concentration totale des monomères constituant le modificateur d'impact pour les résines de méthacrylate de polyméthyle, afin de préparer un germe ;
(b) la polymérisation de 50 à 99 parties en poids de l'acrylate d'alkyle, de jusqu'à 40 parties en poids du composé vinylique aromatique, de 0,5 à 5 parties en poids du monomère réticulable et de 0,5 à 5 parties en poids du comonomère de polyéthylène glycol, sur la base des 100 parties en poids de la concentration totale des monomères constituant le modificateur d'impact pour résines de méthacrylate de polyméthyle, en la présence du germe, afin de préparer un coeur de caoutchouc ; et
(c) la polymérisation d'un mélange comprenant 50 à 99,995 parties en poids de méthacrylate de méthyle et 0,005 à 50 parties en poids d'au moins un composé sélectionné parmi le groupe constitué d'acrylate d'alkyle et de composé vinylique aromatique, sur la base des 100 parties en poids de la concentration totale des monomères constituant le modificateur d'impact pour résines de méthacrylate de polyméthyle, en la présence du coeur, afin de préparer une enveloppe.

9. Procédé selon la revendication 7, dans lequel le mélange de monomères de (b) comprend en outre au moins un monomère réticulable sélectionné parmi le groupe constitué de diacrylate de 1,3-butane diol, de diméthacrylate de 1,3-butane diol, de diacrylate de 1,4-butane diol, de diméthacrylate de 1,4-butane diol, d'acrylate d'alkyle, de méthacrylate d'allyle, de triacrylate de triméthylolpropane, de diacrylate de tétraéthylèneglycol, de diméthacrylate de tétraéthylèneglycol et de benzène de divinyle.

10. Procédé selon la revendication 7, dans lequel l'acrylate d'alkyle de (b) et de (c) est au moins sélectionné parmi le groupe constitué d'acrylate de méthyle, d'acrylate d'éthyle, d'acrylate de propyle, d'acrylate d'isopropyle, d'acrylate de butyle, d'acrylate d'hexyle, d'acrylate d'octyle et d'acrylate de 2-éthylhexyle.

11. Procédé selon la revendication 7, dans lequel le composé vinylique aromatique de (b) et de (c) est au moins un composé sélectionné parmi le groupe constitué de styrène, d'alpha-méthylstyrène, de p-méthylstyrène, de vinyle toluène, d'alkyle styrène substitué par l'alkyle en C₁ à C₃ et de styrène substitué par l'halogène.

12. Composition de résine de méthacrylate de polyméthyle comprenant :
15 à 25 % du modificateur d'impact pour résines de méthacrylate de polyméthyle selon la revendication 1 ; et 75 à 85 % en poids d'une résine de méthacrylate de polyméthyle.
